# DEMANDE DE BREVET EUROPEEN

(11) **EP 2 045 757 A1**
(43) Date de publication de la demande: **08.04.2009**
(21) Numéro de dépôt: 08165404.8
(22) Date de dépôt: 29.09.2008
(51) Int. Cl.: G06F 21/24, G06F 21/00, H04L 29/06

(54) **Procédé de publication électronique d'au moins une baladodiffusion et serveur de fichier de mise en oeuvre dudit procédé**

(30) Priorité: 27.09.2007 FR 0757909
(71) Demandeur: Libcast Sarl, 33000 Bordeaux (FR)
(72) Inventeur: Vercoustre, Brice, 78220 Viroflay (FR); Montet, Cédric, 33000 Bordeaux (FR)
(74) Mandataire: Schmit, Christian Norbert Marie

(57) **Abrégé**

Procédé de publication électronique d'au moins une baladodiffusion et serveur de fichier de type serveur http de mise en oeuvre dudit procédé

La présente invention a pour objet un procédé de publication électronique d'au moins une baladodiffusion. La baladodiffusion comporte au moins un fichier multimédia (34a) et un fichier RSS (34b) via un serveur de fichier de type serveur http. Ce fichier RSS permet aux utilisateurs de s'abonner au baladodiffusion pour pouvoir télécharger automatiquement les nouveaux fichiers multimédia présents dans le répertoire (29) dès leur connexion avec le réseau Internet (10) ou dès l'exécution du logiciel (31) du flux RSS. L'invention met en oeuvre une gestion locale (22) des droits d'accès d'un utilisateur à la baladodiffusion via le serveur http. Les critères de restriction des droits d'accès sont définis par une modification locale d'un fichier (34c) de configuration du serveur http. Cette modification locale ne nécessite ni une configuration générale ni une interruption du serveur.

## Description

### Domaine de l'invention

La présente invention a pour objet un procédé de publication électronique d'au moins une baladodiffusion. Le domaine de l'invention est celui des baladodiffusion. La baladodiffusion, aussi appelée podcasting dans le domaine de l'invention, est un procédé de diffusion de fichiers multimédia, audio et/ou vidéo sur le réseau Internet, ces fichiers sont nommés podcasts ou balados. On entend ici par vidéo des images fixes ou animées. La présente invention concerne également un serveur de type http mettant en oeuvre un tel procédé de publication.

Un but de l'invention est d'effectuer une gestion locale des droits d'accès aux baladodiffusion à un utilisateur authentifiés, au niveau d'un serveur http.

### Etat de la technique

Par l'entremise d'un abonnement à un flux «RSS» ou «Atom», la baladodiffusion permet aux utilisateurs d'automatiser le téléchargement de fichiers multimédia audio et/ou vidéo pour leur baladeur numérique et/ou leur ordinateur personnel en vue d'une écoute immédiate ou ultérieure.

RSS désigne une famille de formats XML (eXtended Markup Language, pour langage de balisage étendu) utilisés pour la syndication de contenu Web (World Wide Web en anglais). Dans le domaine de l'invention la syndication est le fait de rendre accessible de manière standardisée et contractuel tout ou partie du contenu d'un site Internet. Un flux RSS est un fichier au format RSS. Il est aussi désigné comme fil RSS, canal RSS, fichier RSS ou fichier de syndication.

Ce système de syndication est habituellement utilisé pour diffuser les mises à jour de sites dont le contenu change fréquemment, typiquement les sites d'information ou les « blogs ». L'utilisateur peut s'abonner aux flux, ce qui lui permet de consulter rapidement les dernières mises à jour sans avoir à se rendre sur le site.

Actuellement, deux formats peuvent être désignés par ces initiales :
- RDF (Resource Description Framework, pour cadre de description d'une ressource) Site Summary (soit résumé de site), via les normes RSS 0.90 et 1.0
- Really Simple Syndication (pour syndication vraiment simple) via la norme RSS 2.0

Mais on parle aussi souvent de RSS pour désigner également le format Atom.

La baladodiffusion, se différencie de la radiodiffusion par la diffusion du son et/ou de la vidéo, non pas par un mécanisme centralisé qui enverrait un flux vers ses auditeurs (soit un à tous), mais par l'action des auditeurs qui vont chercher eux-mêmes les fichiers (tous à un, ou encore tirée, pulling, au lieu de poussée, pushing). Les auteurs des baladodiffusion publient des fichiers audio et/ou vidéo qui peuvent s'apparenter à une émission multimédia classique. C'est ensuite aux auditeurs que revient le rôle de créer leur propre liste de lecture par leurs différentes souscriptions. Le téléchargement des baladodiffusion, issus des multiples sources qu'ils ont choisies, est alors automatique.

Actuellement, la consultation de pages sur un site internet fonctionne selon une architecture client/serveur. L'auditeur, qui est un utilisateur connecté au réseau via son ordinateur est un client de type navigateur "Web", envoi une requête au serveur http. A chaque requête qu'il reçoit, le serveur présente à l'auditeur la page demandée selon le protocole de communication http. Les pages du serveur http sont accessibles depuis tout l'Internet. Toutefois, il est possible de restreindre l'accès à une page ou à un ensemble de pages du serveur.

Les flux RSS utilisés pour la diffusion des baladodiffusion et de leurs mises à jour sont accessibles depuis tout l'Internet La transmission de la baladodiffusion à l'auditeur via le flux RSS peut être faite à sa demande. Dans ce cas, pour avoir accès à un flux RSS, l'auditeur doit d'abord installer un client de type lecteur RSS sur son ordinateur. Ensuite, il doit s'abonner au flux RSS en copiant l'URL du flux dans son lecteur RSS. L'accès à la baladodiffusion est donc contrôlé par ledit auditeur et est libre d'accès au niveau du serveur.

La transmission de la baladodiffusion à l'auditeur via le flux RSS peut être également faite à travers un site qui agrège le contenu en provenance d'autres sites. Ce site est un site web personnel à l'utilisateur et constitué par des pages onglets. Ce site est, à toute fin pratique, un portail web individuel qui donne accès à une multitude de services.

Actuellement, la philosophie de la publication de la baladodiffusion ainsi que de leurs mises à jour via des flux RSS est de libre accès. Il n'existe donc aucune restriction d'accès pour les auditeurs. La publication des baladodiffusion est de type tout ou rien. Soit elle est publiée et dans ce cas accessible à tout l'Internet soit elle n'est pas publiée. Autant l'accès à des pages d'un site internet est contrôlé par le serveur http autant l'accès aux flux RSS est contrôlé par l'auditeur lui-même. Avec l'essor actuel des baladodiffusion, un besoin de restriction des accès au niveau du serveur http s'est fait ressentir.

### Exposé de l'invention

L'invention a justement pour but de répondre à cette attente. Pour cela, l'invention propose un procédé de publication électronique d'au moins une baladodiffusion. Pour ce faire, l'invention met en oeuvre une gestion locale des droits d'accès d'un utilisateur à une baladodiffusion. Cette gestion des droits d'accès est effectuée au niveau du serveur http. Avec l'invention, il n'est plus nécessaire d'effectuer une configuration générale du serveur pour restreindre l'accès à des fichiers. Cette configuration générale nécessitant un redémarrage du serveur qui entraine une interruption de la connexion du serveur au réseau Internet.

Avec l'invention, les critères de restriction des droits d'accès sont définis par une modification d'un fichier affectant localement la configuration du serveur http. Cette modification locale ne nécessite aucune interruption du serveur.

Le principe de fonctionnement de l'invention est le suivant. On commence par enregistrer les fichiers multimédia dans un répertoire. Puis, un fil RSS est créé dans ce répertoire. Ce fil RSS permettra aux utilisateurs de s'abonner aux baladodiffusion pour pouvoir télécharger automatiquement les nouveaux fichiers multimédia présents dans le répertoire dès leur connexion avec le réseau Internet ou dès l'exécution du logiciel du flux RSS.

L'accès à ce répertoire aux utilisateurs non authentifiés est restreint par le serveur http via un descripteur de protection local. Cette restriction s'applique à tous les fichiers se trouvant dans le répertoire.

Le répertoire ainsi créé est hébergé sur Internet, pour le mettre à disposition des utilisateurs. Cette mise à disposition peut être faîte sur un blog ou un site.

Avec l'invention, il est donc possible de définir à partir du serveur http des droits d'accès à des informations transmises via les flux RSS sans faire une restriction générale de la page sur lequel ledit flux est publié, comme dans l'état de la technique.

L'invention a donc pour objet un procédé de publication électronique d'au moins une baladodiffusion comportant au moins un fichier multimédia et un fichier de description de la baladodiffusion appelé fichier de syndication ou fichier RSS via un serveur de fichier de type serveur http,
caractérisé en ce qu'il comporte les étapes suivantes :
- enregistrement des fichiers multimédia et de description dans un conteneur de type répertoire,
- affectation de droits de lecture à un utilisateur authentifié aux fichiers baladodiffusion via le serveur http au moyen d'un descripteur de protection, le descripteur de protection étant un fichier du serveur ou une partie d'une base de données,
- publication des fichiers multimédia et de description.

Avantageusement l'invention est aussi caractérisée en ce que les droits de lecture sont définis par une modification locale au niveau du conteneur du comportement du serveur http, cette modification locale étant indépendante d'une configuration générale du serveur.

Avantageusement l'invention est aussi caractérisée en ce que les droits de lecture sont enregistrés dans un fichier au niveau du conteneur.

Avantageusement l'invention est aussi caractérisée en ce que les droits de lecture sont enregistrés dans un annuaire de type LDAP.

Avantageusement l'invention est aussi caractérisée en ce qu'il comporte les étapes suivantes :
- réception par le serveur d'une requête de multimédia,
- demande accès à un fichier de la baladodiffusion,
- si le descripteur de protection est associé à ce fichier, alors interprétation par le serveur du descripteur de protection associé,
- si une protection est décrite,
- production et émission d'une requête d'authentification par le serveur,
- sinon, la demande d'accès est autorisée.

Avantageusement l'invention est aussi caractérisée en ce que le serveur comporte un cache de requête d'authentification.

Avantageusement l'invention est aussi caractérisée en ce que les fichiers multimédia sont transcodés selon un ou plusieurs formats pour garantir la portabilité de fichiers multimédia.

Avantageusement l'invention est aussi caractérisée en ce qu'une production automatisée de descripteurs de production comporte les étapes suivantes :
- un utilisateur se connecte et s'authentifie à un serveur de production de descripteurs,
- affichage d'un formulaire de saisie de droits, les droits pouvant être associés à au moins un identifiant d'utilisateur,
- validation d'une description de droits,
- production selon l'authentification du descripteur local pour le serveur de fichier.

Avantageusement l'invention est aussi caractérisée en ce que le serveur de fichier est le serveur de production de droits.

Avantageusement l'invention est aussi caractérisée en ce que le fichier de description est protégé par le descripteur de protection.

Avantageusement l'invention est aussi caractérisée en ce que :
- on accède au fichier de description via un script d'accès gérant au moins le descripteur de protection.

Avantageusement l'invention est aussi caractérisée en ce que le script d'accès gère des statistiques d'accès aux baladodiffusion.

L'invention concerne également un serveur de type http apte à mettre en oeuvre le procédé de publication de l'invention.

### Brève description des dessins

L'invention sera mieux comprise à la lecture de la description qui suit et à l'examen des figures qui l'accompagnent. Celles-ci sont présentées à titre indicatif et nullement limitatif de l'invention.

La figure 1 montre une représentation schématique d'une architecture client/serveur munie des moyens perfectionnés de l'invention.

La figure 2 montre une illustration de moyens mettant en oeuvre le procédé de l'invention.

### Description détaillée de modes de réalisation de l'invention

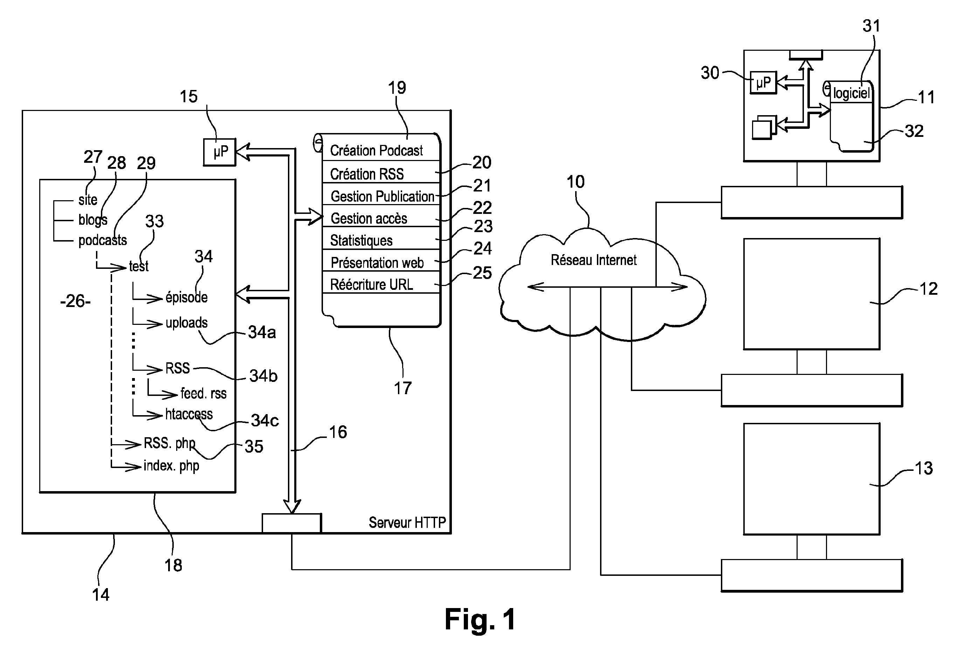

La figure 1 montre une représentation schématique d'une architecture client/serveur munie des moyens perfectionnés de l'invention. L'architecture client/serveur désigne un mode de communication entre plusieurs ordinateurs d'un réseau 10 qui distingue un ou plusieurs postes 11-13 clients d'un serveur 14. Le serveur 14 est un serveur de fichiers de type serveur http. Un serveur http est un logiciel servant des requêtes respectant le protocole de communication client-serveur Hypertext Transfer Protocol (http), qui a été développé pour le World Wide Web.

Un ordinateur sur lequel fonctionne un serveur http est aussi appelé serveur Web. Le terme «serveur Web» peut aussi désigner le serveur http (le logiciel) lui-même.

Le serveur 14 est à l'écoute, prêt à répondre aux requêtes envoyées par les postes 11-13 clients. Chaque poste 11-13 client comporte un logiciel client apte à envoyer des requêtes au serveur 14 via le réseau 10. Dès qu'une requête parvient au serveur 14, il la traite et envoie en réponse les pages demandées au poste 11-13 concerné via le réseau 10.

Dans la description, on prête des actions à des appareils ou à des programmes, cela signifie que ces actions sont exécutées par un microprocesseur de cet appareil ou de l'appareil comportant le programme, ledit microprocesseur étant alors commandé par des codes instruction enregistrés dans une mémoire de l'appareil. Ces codes instruction permettent de mettre en oeuvre les moyens de l'appareil et donc de réaliser l'action entreprise. Le serveur 14 ainsi que les postes 11-13 clients représentent un tel appareil.

Le serveur 14 comporte un microprocesseur 15 connecté à un bus 16. Le serveur 14 comporte aussi une mémoire 17 de programme et une mémoire 18 de données. Les mémoires 17 et 18 sont connectées au bus 16.

La mémoire 17 de programme est divisée en plusieurs zones, chaque zone correspondant à une fonction ou à un mode de fonctionnement du programme du serveur 14.

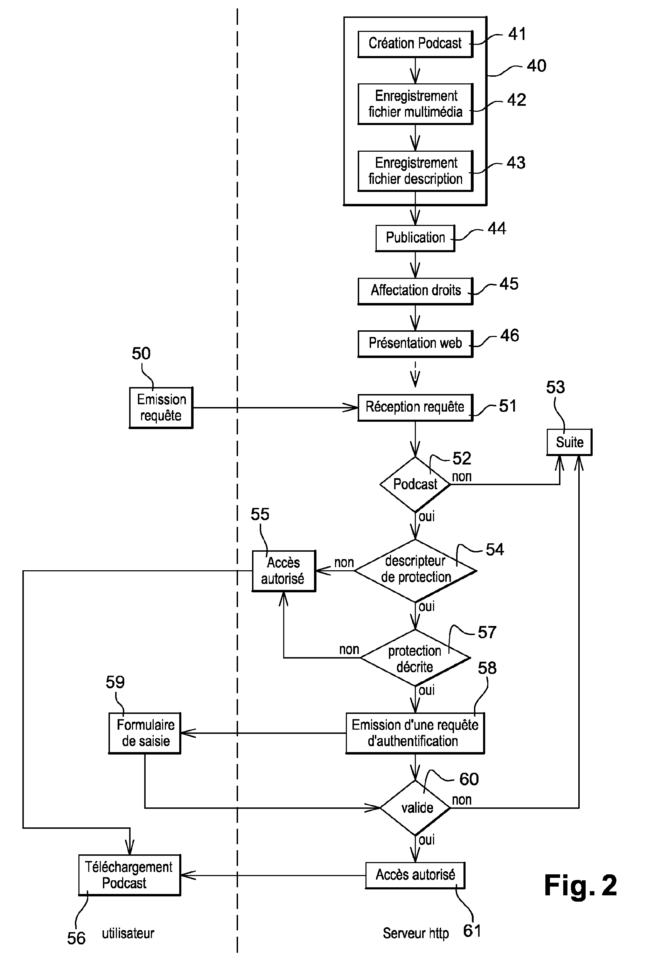

Une zone 19 comporte des codes instruction pour créer des baladodiffusion, des podcasts ou des balados. Une zone 20 comporte des codes instruction pour créer des flux RSS. Un exemple de création de balados et de flux RSS sera décrit plus en détail à la figure 2. Une zone 21 comporte des codes instruction pour gérer la publication des balados sur le réseau. Une zone 22 comporte des codes instruction pour affecter des droits d'accès aux balados, aux utilisateurs des postes 11-13 clients. Une zone 23 comporte des codes instruction pour estimer la fréquentation des utilisateurs aux balados. Une zone 24 comporte des codes instruction pour exporter les balados créés sur un site ou un blog. Une zone 23 comporte des codes instruction pour appliquer des règles de réécriture d'URL aux requêtes des utilisateurs.

La mémoire 18 de données est illustrée dans l'exemple de la figure 1 sous forme d'une arborescence 26. L'arborescence 26 permet d'organiser les données de la mémoire 18, de manière logique et hiérarchisée. Cette organisation rend plus efficace la consultation et la manipulation des données stockées.

A la base de l'arborescence 26 se trouve plusieurs conteneurs 27-29. Les conteneurs sont ici de type répertoire. Un conteneur permet de stocker et d'organiser des données elle-même représentées par des fichiers.

Un des conteneurs est un répertoire 27 nommé "site" dans lequel sont stockées des données accessibles par le Web. Un autre des conteneurs est un répertoire 28 nommé "blogs" dans lequel sont stockées des données d'un ou de plusieurs bloggeurs accessibles par le Web.

Un blogue ou blog en anglais étant un ensemble de scripts interprétés par un moteur coopérant avec un serveur Web. Les scripts produisent des pages au format html en fonction des données enregistrés dans une base de données. Un blog est une forme simple de système de gestion de contenu plus connu sous le nom anglais de Content Management System (CMS). Un bloggeur est un internaute qui publie un blog sur le réseau Internet et le met à jour régulièrement. Un autre des conteneurs est un répertoire 29 de balados nommé "podcasts" dans lequel sont stockées des données multimédia qui, par l'entremise d'un abonnement à un flux RSS, auquel elles sont rattachées, sont accessibles à l'utilisateur. A la base de l'arborescence 26, il peut y avoir plusieurs répertoires 29 "podcasts".

Ces répertoires 27, 28 et 29 peuvent contenir des fichiers et des répertoires, qui eux-mêmes peuvent contenir la même chose.

Dans la mémoire 18 de données les fichiers et les répertoires sont placés de manière cohérente ce qui facilite leur recherche.

Chaque poste 11-13 clients comporte un navigateur Web. Un navigateur Web est un logiciel permettant à l'utilisateur de consulter l'ensemble des répertoires du serveur 14. Le navigateur Web représente techniquement le client http dans l'architecture client/serveur.

Comme représenté schématiquement dans le poste 11 client, chaque poste 11-13 client comporte un microprocesseur 30. Ce microprocesseur 30 est apte à exécuter des codes instructions d'une zone 31 d'une mémoire 32 de programme comportant le logiciel navigateur Web.

La figure 2 montre une illustration d'étapes correspondant à une mise en oeuvre du procédé selon l'invention. La figure 2 montre une première étape préliminaire 41 de création de balados ou podcasts. Cette étape 40 comporte trois sous étapes 41 à 43. A la sous étape 41, un auteur (client de l'hébergeur du site) crée le répertoire podcast dans l'arborescence 26 de la mémoire 18 de données qui lui est allouée. C'est dans ce répertoire 29 que va être enregistré les fichiers multimédia.

Pour ce faire, dans l'étape 42 suivant l'étape 41, est créé un sous répertoire 33 nommé par exemple "test". C'est dans ce sous répertoire 33 que le serveur 14 stocke et organise l'ensemble des données qui seront accessibles à l'utilisateur via son application cliente pour la baladodiffusion désignée par "test". Ici, le nom "test" est donné à titre d'exemple. Dans la pratique, il y a autant de répertoire de ce type que de baladodiffusion accessibles via le serveur 14. Chaque répertoire a un nom unique. Pour la suite, il faut comprendre que les noms attribués aux objets n'ont pas d'impact technique sur les caractéristiques techniques de l'invention. Ils ne servent qu'à clarifier et désigner la description.

Le sous répertoire 33 "test" comporte un dossier 34 nommé "episodes". Ce dossier 34 "episodes" comporte un sous dossier 34a nommé "upload" dans lequel sont stockés des fichiers 34a multimédia audio et/ou vidéo à publier. Le sous répertoire 33 "test" comporte un fichier 35 nommé "rss.script" dans lequel sont enregistrés des codes instruction interprétable par un moteur de scripts coopérant avec le serveur 14 http. Le fichier rss.script comporte des codes instructions permettant de produire des données au format RSS. Ces données au format RSS décrivent la baladodiffusion correspondant au répertoire dans lequel se trouve le fichier rss.script.

Lors de la création des fichiers 34a multimédia, l'auteur saisit des données qui renseignent sur la nature desdits fichiers. Ces données de renseignement sont des métadonnées du fichier 34a multimédia et sont dans une mise en oeuvre contenues dans le fichier lui-même.

Ces métadonnées sont des données signifiantes qui permettent de faciliter l'accès au contenu des fichiers 34a multimédia. Elles représentent en quelque sorte une notice de contenu dudit fichier. Ces métadonnées peuvent comporter les données suivantes permettant d'identifier et de décrire le fichier 34a multimédia : titre, sujet, description, source, langue, catégorie, créateur, éditeur, contributeur, droits (droits d'auteur,...), date de création, type, format, identifiant, mots clés. La liste n'est pas exhaustive.

Dans un mode de réalisation préféré, les fichiers 34a multimédia, vidéo ou audio ne sont pas publiés directement dans leur format initial. Une copie des fichiers 34a multimédia est transcodée selon un ou plusieurs formats permettant de garantir leur portabilité. Dans un exemple, les vidéos peuvent être transcodées selon le format flash (.swfou .slv).

Dans une étape 43 faisant suite à l'étape 42, un fichier 34b de description de la baladodiffusion ou fichier RSS est créé et stocké dans le dossier 34 "episodes". Ici, par fichier RSS on entend un fichier dont le contenu est formaté selon une norme de syndication. Ce fichier 34b RSS permet aux utilisateurs des postes clients de s'abonner aux balados de l'auteur pour pouvoir télécharger automatiquement les nouveaux fichiers 34a multimédia dès le lancement de leur application cliente.

Le fichier 34b RSS comporte des métadonnées. Ces métadonnées sont notamment le titre de la baladodiffusion décrite par le fichier 34b RSS ainsi qu'une description succincte du fichier 34b RSS. Les métadonnées peuvent notamment comporter des renseignements sur les auteurs de la baladodiffusion, les dates de publication et les modifications apportées. La liste n'est pas exhaustive.

Le fichier 34b RSS comporte également un contenu d'un élément multimédia publié. Le contenu de chaque élément multimédia correspond à un ensemble de données associées constituant un élément de base dudit balados. Ce contenu comporte notamment pour chaque élément multimédia son nom, son titre et le lien renvoyant vers ledit élément multimédia, sa date de publication et une description dudit élément multimédia. Ces données sont équivalentes à celles saisies à l'étape 42.

Dans l'étape 43, l'auteur détermine aussi le moment de publication des balados sur le réseau. Cette publication peut être immédiate, en temps réel ou différée.

Dans une étape 44 faisant suite à l'étape 43, il est déterminé les droits d'accès à affecter aux utilisateurs authentifié du réseau. Cette affectation de droits d'accès est mise en oeuvre au moyen d'un fichier de descripteur 34c de protection. Ce fichier de descripteur 34c de protection est stocké dans le dossier 34 "episodes". Le fichier de descripteur 34c de protection est un fichier de restriction qui décrit, pour chaque dossier 34 "episodes", qui a le droit de le lire et/ou de le modifier. Ce fichier de descripteur 34c de protection permet au serveur de gérer les accès aux balados.

Ce fichier de description 34c est créé par l'auteur des balados pour le serveur 14 de fichier qui est ici de type http. Pour ce faire, l'auteur des balados connecté et authentifié saisie dans un formulaire produit par le serveur 14 des droits d'accès aux balados. Ces droits d'accès sont une description de droits associés aux identifiants d'utilisateur. Dès la validation de cette description de droits, le serveur 14 produit le fichier de descripteur 34c local de protection.

Le fichier de descripteur 34c de protection peut être un fichier du type "htaccess". La description des droits d'accès sont déterminés selon différents critères d'authentification.

Un des critères d'authentification peut être l'authentification par le réseau. Dans ce cas, le fichier de descripteur 34c de protection va autoriser ou interdire l'accès aux balados à un groupe d'utilisateurs appartenant à un même domaine.

Un autre des critères d'authentification peut être l'authentification par identifiant et/ou par mot de passe. Dans ce cas, il est créé une base de données dans laquelle sont stockées les caractéristiques ou droits d'accès des utilisateurs autorisés à accéder aux balados. Cette base de données peut être enregistrée n'importe où dans le répertoire podcast. Toutefois, cette base de données ne peut pas être enregistrée dans le répertoire 34 "episodes" protégé. Cette base de données peut être également enregistrée dans un annuaire de type protocole LDAP. Ce protocole LDAP est un protocole de gestion d'annuaires, permettant à des clients Internet d'accéder automatiquement à des services d'annuaires en ligne sur TCP. Dans le cas de l'utilisation d'une authentification, l'interprétation du fichier 34c de descripteur de protection provoque, entre le client et le serveur, des échanges protocolaires dont une conséquence est une demande de saisie d'un mot de passe par l'utilisateur du logiciel client. Le mot de passe saisi est alors envoyé au serveur qui peut le valider ou l'invalider.

Cette base de données peut être également enregistrée dans un annuaire de type RADIUS ou Remote Authentication Dial-In User Service. Ce serveur RADIUS utilise un protocole client-serveur afin de centraliser des données d'authentification de l'utilisateur.

Le fichier de descripteur 34c de protection est déterminé non pas pour tous les conteneurs du serveur mais uniquement pour le conteneur 29 "episodes". Ainsi, les droits d'accès sont définis par une modification locale du comportement du serveur au niveau du dossier 34 "episodes" via lefichier de descripteur 34c de protection. Cette modification locale est indépendante d'une configuration générale du serveur. Ce qui permet de supprimer les inconvénients causés par les interruptions de connexion du serveur au réseau, lors d'une configuration de ce dernier.

Le dossier 34 "episodes" étant protégé par le fichier 34c de descripteur, tous ses sous répertoires et fichiers sont également protégés. Par conséquent, lors d'une réception d'une requête d'accès aux balados par l'entremise d'un lien RSS, dans une mise en oeuvre de l'invention, le serveur http réécrit le lien RSS de sorte que ces liens pointent en faite vers un fichier 35 rss.script. Le fichier 35 rss.script interprète alors le contenu du fichier 34c de descripteur de protection.

Dans le cas où un lien direct serait forgé vers un fichier RSS, alors la configuration générale du serveur 14 force le serveur 14 à prendre en compte le fichier 34c de descripteur de protection qui protège le conteneur qui contient les fichiers multimédia et les fichiers RSS. Dans ce cas, le serveur réécrit le lien. Cette réécriture fournit en sortie un chemin d'accès passant par le fichier 35 rss.script. Le fait de passer par ce fichier 35 rss.script permet au serveur d'activer le fichier de descripteur 34c de protection.

Dans une étape 45 faisant suite à l'étape 44, pour faire connaître et publier les balados créés, lesdits balados peuvent être exportés dans un site déjà existant. Dans un autre exemple, un blog est créé pour la publication de ces balados. Ce blog va s'autogérer et suivre de manière symétrique la progression des balados.

Les étapes 50 à 61 sont indépendantes des étapes 40 à 46. Cette indépendance est représentée dans l'exemple de la figure 2 par des pointillés.

Dans l'étape 50 un utilisateur, final, envoie via son navigateur Web de son poste client une requête au serveur http par l'entremise d'un abonnement à un fichier RSS ou d'un portail web personnalisable. Dans une étape 51 faisant suite à l'étape 50, le serveur reçoit la requête. Il vérifie la présence d'un fichier de descripteur de protection avant de traiter la requête reçue. S'il en détecte la présence, il réécrit la requête afin de modifier le chemin d'accès aux balados. Le chemin est redirigé au fichier 35 rss.script si la requête est un lien rss.

Il détermine dans une étape 52 suivante, si un balados existe pour la requête reçue. Si aucune balados n'est créée pour le fichier RSS correspondant, il renvoie, à une étape 53, au poste client de l'utilisateur une page d'erreur. Sinon, à une étape 54, le serveur détermine si un fichier de descripteur de protection est associé au balados à télécharger. S'il n'existe pas de fichier de descripteur de protection alors le serveur autorise automatique l'accès en lecture à l'utilisateur, dans une étape 55. Dès cette autorisation le serveur active un compteur et comptabilise cet accès. Ce compteur permet au serveur d'analyser notamment la fréquentation des balados et le nombre de visiteur.

Dans une étape 56 faisant suite à l'étape 55, l'utilisateur télécharge le balados sur son poste client pour une écoute ou un visionnement immédiat ou ultérieur.

Dès la détection à l'étape 54 d'un fichier de descripteur de protection, le serveur détermine, à une étape 57 suivante, quel est le type de protection en service dans le fichier de descripteur de protection. Si le type de protection est aucune restriction, alors le serveur applique les étapes 55 et 56 et active le compteur.

Lorsque le type de protection comporte des restrictions, alors le serveur déclenche le système d'authentification. Dans une étape 58 faisant suite à l'étape 57, le serveur produit des formulaires d'authentification et les envoie à une interface du poste client de l'utilisateur à une étape 59.

Dans le but de réduire à une seule le nombre de demande d'authentification par utilisateur, le serveur peut comporter une mémoire cache. Cette mémoire cache permet de stocker, pour un utilisateur donné, ses données d'authentification dès sa première authentification validée par le serveur. A chaque nouvelle émission de requête de l'utilisateur vers le serveur http, ce dernier extrait directement de la mémoire cache les données d'authentification correspondant à cet utilisateur. Ceci, permet de ne pas demander à l'utilisateur de s'authentifier à chaque fois qu'il envoie une requête au serveur http.

Dans une étape 60 suivante, le serveur traite les données reçues via une validation par l'utilisateur de ces formulaires transmises. Lorsque les données reçues ne correspondent pas à des données du fichier de descripteur de protection alors le serveur applique l'étape 53 où il renvoie au poste client de l'utilisateur une page d'erreur.

Lorsque les données reçues correspondent à des données du fichier de descripteur de protection alors le serveur dans une étape 61 suivante autorise l'accès à l'utilisateur aux balados et active le compteur. Dans l'étape 56 faisant suite à l'étape 61, l'utilisateur télécharge les balados sur son poste client pour une écoute ou un visionnement immédiat ou ultérieur.

L'invention peut être mise en oeuvre en utilisant un serveur http Apache sur lequel le module d'authentification est activé. Le serveur coopère alors avec le moteur de script PHP. Les fichiers de descripteur 34c de protection correspondent alors à des fichiers .htaccess décrits dans la documentation du serveur Apache.

L'invention peut aussi être mise en oeuvre par un autre moteur de script de type langage PERL connu sous le nom anglais de Practical Extraction and Report Language ou PYTHON qui est un langage de script.

L'invention peut aussi s'appuyer sur un autre serveur http par exemple IIS. Dans ce cas, les droits locaux sont affectés directement via les droits d'accès au répertoire, c'est-à-dire via les droits d'accès au niveau du système d'exploitation. Dans ce cas, le moteur de script peut être un langage PHP ou un protocole ASP.

## Revendications

1. Procédé de publication électronique d'au moins une baladodiffusion comportant au moins un fichier multimédia (34a) et un fichier de description (34b) de la baladodiffusion appelé fichier de syndication ou fichier RSS via un serveur (14) de fichier de type serveur http,
**caractérisé en ce qu'**il comporte les étapes suivantes :
- enregistrement des fichiers multimédia et de description dans un conteneur (29) de type répertoire,
- affectation (22) de droits de lecture à un utilisateur authentifié aux fichiers baladodiffusion via le serveur http au moyen d'un descripteur (54) de protection, le descripteur de protection étant un fichier du serveur ou une partie d'une base de données,
- publication (21) des fichiers multimédia et de description.

2. Procédé selon la revendication 1, **caractérisé en ce que** les droits de lecture sont définis par une modification locale au niveau du conteneur du comportement du serveur http, cette modification locale étant indépendante d'une configuration générale du serveur.

3. Procédé selon l'une des revendications 1 à 2, **caractérisé en ce que** les droits de lecture sont enregistrés dans un fichier (34c) au niveau du conteneur.

4. Procédé selon l'une des revendications 1 à 2, **caractérisé en ce que** les droits de lecture sont enregistrés dans un annuaire de type LDAP.

5. Procédé selon l'une des revendications 1 à 4, **caractérisé en ce qu'**il comporte les étapes suivantes :
- réception par le serveur d'une requête (51) de multimédia,
- demande accès à un fichier de la baladodiffusion,
- si le descripteur de protection est associé à ce fichier, alors interprétation par le serveur du descripteur de protection associé,
- si une protection (57) est décrite,
- production et émission (58) d'une requête d'authentification par le serveur,
- sinon, la demande d'accès est autorisée.

6. Procédé selon la revendication 5, **caractérisé en ce que** le serveur comporte une mémoire cache de requête d'authentification.

7. Procédé selon l'une des revendications 1 à 6, **caractérisé en ce que** les fichiers multimédia sont transcodés selon un ou plusieurs formats pour garantir la portabilité de fichiers multimédia.

8. Procédé selon l'une des revendications 1 à 7, **caractérisé en ce qu'**une production automatisée de descripteurs de production comporte les étapes suivantes :
- un utilisateur se connecte et s'authentifie à un serveur de production de descripteurs,
- affichage d'un formulaire de saisie de droits, les droits pouvant être associés à au moins un identifiant d'utilisateur,
- validation d'une description de droits,
- production selon l'authentification du descripteur local pour le serveur de fichier.

9. Procédé selon la revendication 8, **caractérisé en ce que** le serveur de fichier est le serveur de production de droits.

10. Procédé selon l'une des revendications 1 à 9, **caractérisé en ce que** le fichier de description est protégé par le descripteur de protection.

11. Procédé selon l'une des revendications 1 à 10, **caractérisé en ce que :**
- on accède au fichier de description via un script (35) d'accès gérant au moins le descripteur de protection.

12. Procédé selon la revendication 11, **caractérisé en ce que** le script d'accès gère des statistiques d'accès aux baladodiffusion.

13. Serveur (14) de type http **caractérisé en ce qu'**il comporte un microprocesseur apte à mettre en oeuvre un procédé de publication électronique d'au moins une baladodiffusion selon l'une quelconque des revendications 1 à 12.
